# FASCICULE DE BREVET EUROPEEN

(11) **EP 3 792 223 B1**
(45) Date de publication et mention de la délivrance du brevet: **20.04.2022**
(21) Numéro de dépôt: 20195025.0
(22) Date de dépôt: 08.09.2020
(51) Int. Cl.: C02F 1/66, C02F 103/10, C02F 103/16

(54) **MÉTHODE D'ADOUCISSEMENT OPTIMISÉ D'UN EFFLUENT INDUSTRIEL ALCALIN SOUS PRESSION DE CO2**
METHODE ZUR OPTIMIERTEN ENTHÄRTUNG EINES ALKALISCHEN INDUSTRIEABWASSERS UNTER CO2-DRUCK
METHOD FOR OPTIMISED DESALINATION OF AN ALKALINE INDUSTRIAL EFFLUENT WITH PRESSURISED CO2

(30) Priorité: 10.09.2019 FR 1909926
(43) Date de publication de la demande: 17.03.2021
(73) Titulaire: L'AIR LIQUIDE, SOCIETE ANONYME POUR L'ETUDE ET L'EXPLOITATION DES PROCEDES GEORGES CLAUDE, 75007 Paris (FR); Air Liquide France Industrie, 75007 Paris (FR)
(72) Inventeur: ALBAN, Bruno, 92227 BAGNEUX (FR); BRAS, Dominique, 92227 BAGNEUX (FR); CAMPO, Philippe, 92227 BAGNEUX (FR)
(74) Mandataire: Air Liquide

(56) Documents cités:
- FR-A1- 2 809 718
- US-A- 5 108 929
- US-A1- 2011 233 139

## Description

La présente invention concerne le domaine de l'adoucissement d'effluents fortement alcalinisés en vue de les neutraliser et/ou de les adoucir, c'est-à-dire d'éliminer totalement ou partiellement les sels de calcium présents. On trouve cette problématique notamment dans l'industrie sidérurgique, mais d'autres industries peuvent être concernées et notamment on peut citer le cas du traitement des eaux issues de certains effluents miniers.

A titre illustratif, le principe de la précipitation du calcium contenu dans une solution alcaline (chaulée par exemple, c'est-à-dire en ajoutant de la chaux éteinte CaOH₂ ou vive CaO) avec du CO₂ est bien connu.

C'est sur ce principe que sont fabriquées des particules de carbonate de calcium précipité (appelé aussi « PCC ») grâce à une première étape de décarbonatation de calcaire par exemple (production de chaux vive CaO et de CO₂), suivi d'une hydratation (qui produit de la chaux éteinte Ca(OH)₂), processus finalement terminé par une carbonatation ou précipitation des particules de CaCO₃ formé. Ce procédé permet d'obtenir des particules de qualité (calibrées, purifiées...) qui s'avèrent très utiles dans le domaine de la pâte à papier par exemple.

Il en est de même pour les eaux qui contiennent beaucoup d'aluminium dissous. La différence notable entre les deux provient des équilibres/formes des molécules qui contiennent l'aluminium ou le calcium et qui sont différentes. On a tendance à précipiter les espèces en question en abaissant le pH dans le cas de l'aluminium dissous (en formant de l'hydroxyde d'aluminium Al(OH)₃) alors qu'il est recommandé d'augmenter le pH dans le cas du calcium (en formant des carbonates CO₃²⁻).

On s'intéresse donc dans le cadre de la présente invention au traitement d'effluents qui contiennent de grandes quantités de calcium (on parle de dureté), ou de magnésium, souvent majoritairement dissous (on peut également observer une suspension de particules qui contiennent du calcium). Ces effluents peuvent être issus notamment de la sidérurgie.

Il est connu de faire précipiter le calcium en ajoutant des ions carbonate et ceux de quelques façon que ce soit. Par exemple en injectant du CO₂ dans un effluent suffisamment alcalin exemple pH 12 à 12,5, effluent classiquement rencontré dans en sidérurgie. A ce pH le CO₂ absorbé est sous forme de carbonate qui en présence de calcium précipite sous forme de carbonate de calcium. La zone optimale de pH se situe entre 10 et 14, de préférence entre 10,3 et 12.

Les carbonates peuvent être amenés en mélangeant de la soude et du CO₂ ce qui peut suivant les doses utilisées augmenter le pH final. L'objectif est d'apporter au milieu des carbonates, tout en restant dans une gamme de pH supérieur à 10,3 pour s'assurer de rester sous forme de carbonate.

Le brevet US 5,108,929 décrit un procédé de contrôle du pH d'un effluent alcalin par injection de CO₂.

Néanmoins, l'injection directe du CO₂ et donc sa mise en contact avec l'effluent très alcalin est toujours difficile. En effet, le CO₂, provoque à l'endroit de l'injection une forte concentration de carbonates. Ces carbonates vont se lier avec les ions calcium présent et vont précipiter au niveau de l'injecteur. La formation du carbonate de calcium, très incrustant lors de sa formation, va colmater rapidement le système d'injection, réduire ses performances, jusqu'à le boucher totalement. Pour pallier-à cet inconvénient de l'ajout direct de CO₂, il est très souvent mis en œuvre une injection d'hydrogénocarbonate (HCO₃⁻), ou de carbonate de sodium en solution.

Néanmoins, cette solution, c'est-à-dire l'injection de CO₂ dans une solution alcaline de type soude pour avoir en solution d'ions hydrogénocarbonate ou carbonate, présente les inconvénients suivants :
- on consomme à la fois de l'eau et une base comme la soude (dont le coût est élevé).
- on apporte de la salinité supplémentaire à l'effluent (par exemple, en utilisant de la soude, on produit des sels de sodium).

Pour ce qui est de l'injection directe de CO₂ dans un effluent alcalin chargé en ion calcium ou équivalent, malheureusement, cette opération s'avère difficile à réaliser pour les raisons suivantes :
- l'homogénéisation ou le mélange de l'effluent (liquide) et du gaz (CO₂) n'est pas évidente, c'est-à-dire pas instantanée. Aussi, la zone d'injection (qu'il s'agisse d'un injecteur ou d'un simple tube perforé par exemple), qui forme l'interface entre effluent et gaz s'avère produire très rapidement beaucoup de précipités qui provoquent des bouchages difficiles à éliminer : nécessité d'arrêt et décapage à l'acide fort par exemple.
- par ailleurs, les particules formées s'avèrent assez résistantes et difficiles à redissoudre ensuite. Elles entrainent donc alors souvent des bouchages en l'aval de l'endroit d'injection.
- d'autre part, les différentes étapes sont souvent réalisées dans une même zone, un même appareil ou tuyauterie, alors que les conditions requises pour chaque étape devraient et sont différentes.

Ainsi, en résumé, compte tenu des éléments ci-dessus évoqués, l'opération d'injection de CO₂ peut être très difficile à conduire voire presque impossible et son application dès lors abandonnée par l'homme du métier.

La Demanderesse a proposé une solution très intéressante à ces problématiques, dans la demande FR-1854872, selon laquelle on prélève une partie de l'effluent en sortie de décanteur et en amont d'une éventuelle (mais généralement présente) pompe de reprise des effluents traités pour les renvoyer dans le procédé ou ailleurs, il est alors à la pression atmosphérique, on le dirige à l'aide d'une pompe dans une zone / réacteur, zone où l'on a installé une boucle de recirculation qui permet de dissoudre du CO₂, typiquement entre 1 et 3 bars.

On prélève alors une portion de cette solution très chargée en CO₂ que l'on mélange avec l'effluent initial en tête de décanteur.

En d'autres termes le document précité décrit une méthode de traitement d'un effluent industriel chargé en calcium et/ou magnésium en vue d'en éliminer tout ou partie du calcium et/ou magnésium, comprenant la mise en oeuvre des mesures suivantes :
- on conduit l'effluent à traiter dans une première zone, première zone où l'on maintient un pH préférentiellement compris entre 10 à 12, de façon à favoriser la précipitation du calcium ou magnésium sous forme de carbonate et faciliter ainsi son élimination ;
- on dispose d'une seconde zone comportant une cuve ;
- on organise la recirculation d'une partie du milieu localisé dans la zone 1 vers la zone 2 puis de là son retour dans la zone 1;
- on dispose d'une boucle secondaire permettant de prélever du fluide de la cuve et de retourner le fluide dans la cuve, ainsi que de moyens permettant d'injecter du CO₂ gazeux dans le fluide circulant dans la boucle ;
- on procède à la séparation et l'évacuation des particules solides formées dans la zone 1.

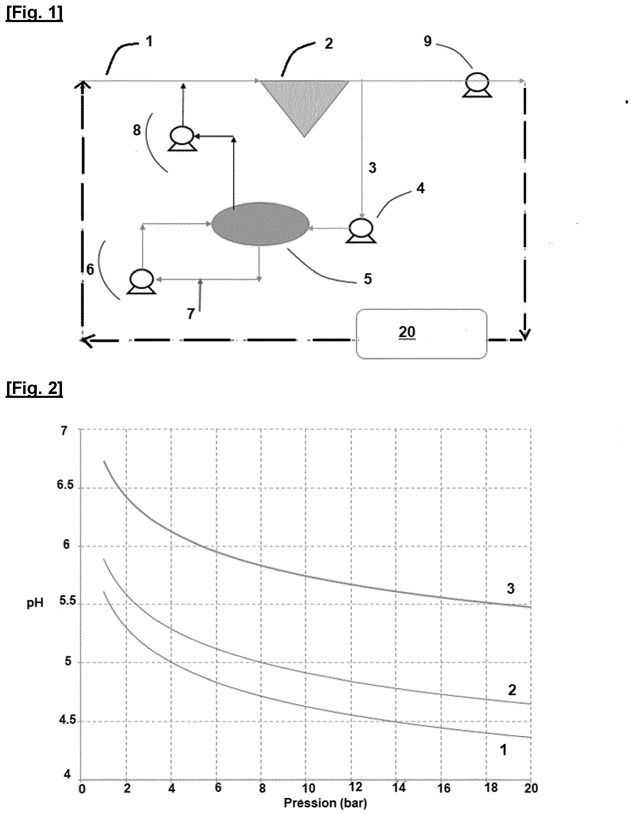

**[****Fig. 1****]** annexée illustre les principaux éléments de cette solution antérieure :
- 1 : l'effluent initial à traiter
- 2 : le décanteur (1ere zone)
- 3 : le prélèvement d'une partie de l'effluent du décanteur pour l'envoyer dans une seconde zone
- 4 : une pompe
- 5 : cuve de la seconde zone
- 6 : la boucle de recirculation installée dans la seconde zone
- 7 : l'injection de CO₂ dans la dite boucle
- 8 : prélèvement de la cuve de la solution chargée en CO₂ pour la diriger vers l'effluent initial en tête de décanteur
- 9 : une pompe de reprise des effluents traités pour les renvoyer dans le procédé du site (20).

Dans cette solution antérieure on pouvait considérer que l'on pouvait accepter techniquement un effluent contenant encore du calcium (dans une gamme de concentration typiquement comprise entre 2 et 300 mg/l, mais préférentiellement pour une concentration inférieure à 80 mg/l) cela grâce à la seconde zone de contact. En effet, la zone de contact dans ce procédé est à un pH bas, plus exactement à un pH compris entre 5 et 6,5. A ce pH les formes majoritaires du CO2 sont le CO2 dissous et les ions hydrogénocarbonate. La présence d'ion carbonate est quasi nulle empêchant ainsi la formation de carbonate de calcium et le risque de précipitation et de bouchage.

On propose selon la présente invention une solution d'amélioration de ladite solution antérieure, notamment pour la simplifier, en ce que l'on ne met pas en œuvre de réacteur de dissolution dans une seconde zone, on propose ici d'effectuer la dissolution du CO₂ en ligne .

En effet on prend / on dérive de l'effluent en sortie du décanteur, grâce à l'intervention d'une pompe de reprise haute pression qui permet le renvoi de l'effluent traité dans le procédé (haute pression i.e typiquement 8 à 10bar).

En d'autres termes, juste après l'injection du CO₂ dans le flux dérivé, on se trouve dans un état où la formation de carbonate n'est pas possible et ainsi on élimine de façon significative le risque de colmatage dans la canalisation et à proximité des injecteurs.

La pression élevée de l'eau dans le débit dérivé (typiquement 8 à 10 bar) permet de faciliter la dissolution du CO₂, et d'atteindre des niveaux de concentration en CO₂ dissous importantes, et ainsi atteindre des conditions de pH faible évitant le risque de colmatage.

[Fig. 2] annexée permet d'illustrer ceci, figure dont les courbes 1, 2 et 3 permettent de visualiser le pH pouvant être atteint à la saturation en CO₂ d'un effluent en fonction de la pression et de la concentration en soude contenu par l'effluent initial :
- courbe 1 : soude à 250mg/l (20°C)
- courbe 2 : soude à 500mg/l (20°C)
- courbe 3 : soude à 4000mg/l (20°C).

On observe ainsi que pour un effluent contenant initialement 500 mg /l de soude, le pH le plus bas pouvant être atteint à la pression atmosphérique est proche de 5,8. Tandis qu'à une pression de 10 bar, il est possible d'atteindre un pH proche de 4,8 réduisant ainsi le risque de colmatage et permettant même de détruire ou redissoudre d'éventuels dépôts de carbonates formés précédemment.

Selon la présente invention, et contrairement à la solution antérieure évoquée plus haut, on ne peut pas se permettre de récupérer un effluent « sale » c'est-à-dire contenant encore une concentration de calcium haute. En effet, en cas de concentration en calcium élevée il y a un risque de colmatage plus ou moins rapide. Avec une faible concentration en calcium, on observera peut être un colmatage lent au niveau de l'injecteur principal, mais on peut palier à cela par un des modes avantageux de mise en oeuvre de l'invention où l'on met en œuvre un deuxième point d'injection en amont du premier. Ce deuxième point permet de façon séquencée d'injecter du CO₂ pour acidifier et ainsi décolmater si nécessaire le premier point. Comme ce deuxième point est préférentiellement utilisé de façon séquencée, par exemple 15 minutes par jour, le risque de colmatage de ce deuxième point est réduit d'un facteur proche de 15 minutes sur 24h, soit d'environ 99%.

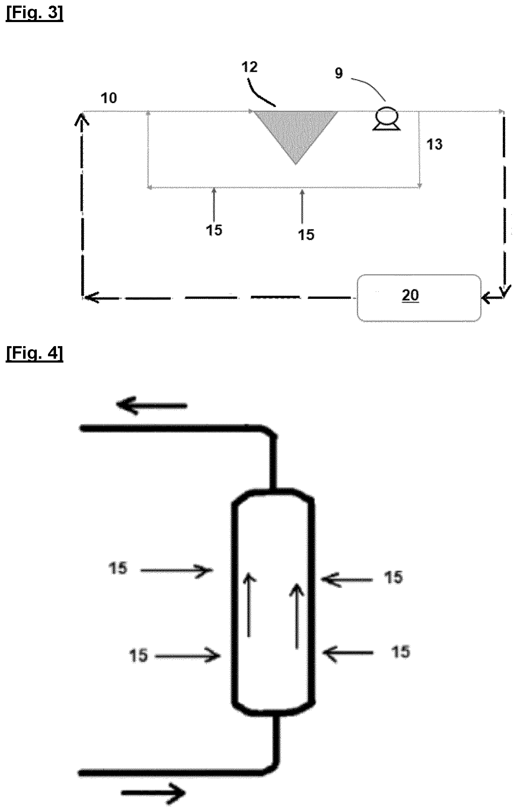

**[****Fig. 3****]** annexée fournit quant à elle une représentation schématique partielle d'une installation convenant pour la mise en œuvre de la présente invention :
- - 10 :: l'effluent initial à traiter
- - 12 :: le décanteur
- - 13 :: le prélèvement (dérivation) d'une partie de l'effluent du décanteur
- - 9 :: une pompe de reprise, haute pression
- - 15 :: une ou de préférence plusieurs injections de CO₂ dans le débit prélevé, avant de renvoyer ce débit en tête sur l'arrivée initiale d'effluent.

L'invention concerne alors un procédé de traitement d'un effluent industriel chargé en calcium en vue d'en éliminer tout ou partie du calcium, comprenant la mise en oeuvre des mesures suivantes :
- on conduit l'effluent à traiter dans une zone munie d'un décanteur ;
- on dérive une partie de l'effluent, partie prélevée en sortie de décanteur, partie comprise entre 3 et 25% du débit sortant du décanteur, de préférence entre 5 et 10% du débit sortant du décanteur, partie prélevée en aval d'une pompe haute pression, fonctionnant à une pression typiquement comprise entre 8 et 10 bars ;
- on procède à au moins une injection de CO₂ gazeux dans le flux dérivé, réalisant ainsi une réduction du pH du flux dérivé dans la gamme allant de 4 à 6,8, de préférence dans la gamme allant de 4,5 à 6 ;
- on organise le retour du flux dérivé ainsi traité dans l'effluent initial avant son arrivée dans le décanteur ou dans le décanteur proprement dit.

L'invention peut par ailleurs avantageusement adopter l'un ou plusieurs des modes de réalisation suivants :
- la quantité de CO₂ injecté dans le flux dérivé permet d'apporter sous forme de carbonate 80 à 100% du besoin stœchiométrique pour précipiter les métaux, en particulier le calcium, du flux à traiter, ceci après retour du flux dérivé traité dans le flux principal initial.
- on régule la quantité optimale de CO₂ à injecter à partir d'une mesure de pH d'entrée (effluent à traiter, avant ou après réintroduction du débit dérivé « traité ») ou à partir d'une mesure de pH ou de conductivité réalisée dans le décanteur ou dans le flux en sortie de décanteur.
- l'injection du CO₂ sur le flux dérivé est réalisée par un système de type mélangeur statique, ou élément poreux, ou venturi ou autres systèmes connus de l'homme du métier pour les injections de gaz en ligne.
- on procède à ladite (première) injection de CO₂ dans le flux dérivé, et l'on positionne une seconde injection, dans le flux dérivé, en amont de la première injection, par exemple pour injecter de façon séquencée (par exemple 15 minutes par jour) ou occasionnelle du CO₂ , afin de détartrer (si nécessaire) le (1^{er}) point d'injection principal, le débit de CO₂ injecté ici sera alors avantageusement compris entre les débit minimum et maximum calculés pour le point principal d'injection.
- la 1ere injection est réalisée de façon continue , ou séquencée avec une fréquence élevée, préférentiellement plusieurs fois par heure, par exemple au moins 3 fois/h.
- la seconde injection (amont) est réalisée de façon séquencée, avec une fréquence peu élevée, c'est-à-dire située entre 1 et 20 fois par jour, mais de préférence entre 1 à 4 fois par jour.

En effet, en sachant que l'injection a lieu typiquement plusieurs heures par jour, avec le temps il y a un risque certes faible mais présent d'un colmatage partiel du système. A l'aide d'un point d'injection additionnel de CO₂ en amont du point principal, il est possible de séquencer l'injection (par exemple quelques minutes par jour, ou encore une fois par semaine ou encore une fois par mois), et l'effluent ainsi acidifié en amont du point d'injection principal permet de limiter le risque d'un éventuel dépôt qui se réaliserait au niveau du point d'injection principal. Cette proposition de seconde injection amont permet on le comprend de réduire la fréquence de maintenance de l'ensemble.

Selon un autre mode avantageux de mise en œuvre de l'invention, et notamment pour laisser une disponibilité complète de l'installation, il est possible de doubler la ligne de dérivation et les deux points d'injection sous la forme de deux lignes parallèles. Une ligne est utilisée de façon permanente, la deuxième reste en réserve, elle est utilisée en cas de maintenance de la première ligne.

**[****Fig. 4****]** annexée illustre un tel mode.

On détaille ci-dessous les résultats obtenus dans le cadre d'un exemple de mise en œuvre industrielle :
- détermination du besoin minimum ou stœchiométrique en CO₂ pour précipiter la totalité (80 à 100%) du calcium présent dans un débit D d'effluent (10): X en kg/h de CO₂.
Cela correspond pour précipiter le calcium à :
C1 : concentration en Calcium en g/m³
M_{Ca} : Masse molaire calcium
M_{CO2} : Masse molaire CO₂
Q : débit d'effluent.
Besoin minimum en CO₂ : X = C1 *Q /Mca * M_{CO2} /1000 en kg/h
- calcul du débit minimum d'effluent à dériver D', de préférence en sortie de décanteur (D'=X / S où S est la solubilité du CO₂ aux conditions opératoires qui règnent dans la dérivation, à savoir la température et la pression).

A titre d'exemple :
Un effluent avec un débit Q = 2000 m³/h
Une concentration C1 en calcium que l'on souhaite éliminer de 54 g/m3
Le besoin horaire en CO₂ est alors de : X = 54/40 * 44 *2000/1000 ≈ 120 kg/h
La pression de l'effluent après la pompe de reprise en sortie décanteur est P = 8 bar abs
La température est T=20°C.

Dans ces conditions de pression et température, la solubilité du CO₂ démontre qu'il est possible de dissoudre environ 13,6 kg de CO₂ par m³ d'effluent = 1,7 * 8.

En dérivant un débit de 10 m³/h, il est alors possible de dissoudre et d'apporter environ 136 kg/h de CO₂=10 * 13,6 soit une quantité supérieure au besoin maximum.

Pour rester toujours inférieur ou égal à un pH de 6,5 dans la boucle dérivée, il convient d'injecter à la pression de 8 bar abs, soit un minimum de 25 kg/h de CO₂.

En résumé pour ce cas, nous dérivons 10 m³/h dans lequel nous injectons jusqu'à 120 kg/h de CO₂, ce qui permet de dissoudre jusqu'à 136 kg/h de CO₂.Nous injectons toujours une quantité minimale de 25 kg/h pour que le débit dérivé soit acide.

## Revendications

1. Procédé de traitement d'un effluent industriel chargé en calcium en vue d'en éliminer tout ou partie du calcium, comprenant la mise en oeuvre des mesures suivantes :
- on conduit l'effluent (10) à traiter dans une zone munie d'un décanteur (12);
- on dérive (13) une partie de l'effluent dans une ligne de dérivation, partie prélevée en sortie de décanteur, partie comprise entre 3 et 25% du débit sortant du décanteur, de préférence entre 5 et 10% du débit sortant du décanteur, partie prélevée en aval d'une pompe haute pression (9), à une pression comprise entre 2 et 15 bar, de préférence entre 3 et 10 bar, et encore plus préférentiellement entre 8 et 10 bar;
- on procède à au moins une injection (15) de CO₂ gazeux dans le flux dérivé, réalisant ainsi une réduction du pH du flux dérivé dans la gamme allant de 4 à 6,8, de préférence dans la gamme allant de 4,5 à 6 ;
- on organise le retour du flux dérivé ainsi traité dans l'effluent initial avant son arrivée dans le décanteur ou dans le décanteur proprement dit.

2. Procédé selon la revendication 1, **se caractérisant en ce que** l'on procède à une première injection de CO₂ dans le flux dérivé, et à une seconde injection dans le flux dérivé, en amont de la première injection.

3. Procédé selon la revendication 2, **se caractérisant en ce que** la seconde injection amont est une injection séquencée ou occasionnelle du CO₂, afin de permettre de détartrer le 1er point d'injection en aval.

4. Procédé selon la revendication 2 ou 3, **se caractérisant en ce que** la 1ere injection est réalisée de façon continue ou séquencée, avec une fréquence s'élevant préférentiellement à plusieurs fois par heure, par exemple au moins 3 fois/h.

5. Procédé selon l'une des revendication 2 à 4, **se caractérisant en ce que** la seconde injection amont est réalisée de façon séquencée, avec une fréquence située entre 1 et 20 fois par jour, mais de préférence entre 1 à 4 fois par jour.

6. Procédé selon l'une des revendication 2 à 5, **se caractérisant en ce que** la ligne de dérivation est une ligne dédoublée sous la forme de deux lignes parallèles, permettant que l'une de ces deux lignes soit utilisée de façon permanente, tandis que la seconde ligne reste en réserve, par exemple pour être utilisée en cas de maintenance de la première ligne.

## Patentansprüche

1. Verfahren zur Aufbereitung eines mit Calcium belasteten Industrieabwassers, um daraus das Calcium vollständig oder teilweise zu entfernen, umfassend die Durchführung der folgenden Maßnahmen:
- man leitet das zu behandelnde Abwasser (10) in eine mit einem Dekanter (12) ausgestattete Zone;
- man leitet einen Teil des Abwassers in eine Abzweigungsleitung ab (13), Teil am Ausgang des Dekanters entnommen wird, Teil von zwischen 3 und 25 % des aus dem Dekanter kommenden Durchsatzes, vorzugsweise zwischen 5 und 10 % des aus dem Dekanter kommenden Durchsatzes, Teil stromabwärts einer Hochdruckpumpe (9) bei einem Druck zwischen 2 und 15 bar, vorzugsweise zwischen 3 und 10 bar und noch stärker bevorzugt zwischen 8 und 10 bar entnommen wird;
- man führt mindestens eine Injektion (15) von gasförmigem CO₂ in die abgeleitete Strömung durch, wodurch eine Verringerung des pH-Werts der abgeleiteten Strömung im Bereich von 4 bis 6,8, vorzugsweise im Bereich von 4,5 bis 6 bewirkt wird; und
- man führt die Rückführung der so behandelten abgeleiteten Strömung in das anfängliche Abwasser vor dessen Ankunft im Dekanter oder im eigentlichen Dekanter durch.

2. Verfahren nach Anspruch 1, **dadurch gekennzeichnet, dass** man eine erste Injektion von CO₂ in die abgeleitete Strömung sowie eine zweite Injektion in die abgeleitete Strömung stromaufwärts der ersten Injektion durchführt.

3. Verfahren nach Anspruch 2, **dadurch gekennzeichnet, dass** es sich bei der zweiten, stromaufwärts durchgeführten Injektion um eine schrittweise oder gelegentliche CO₂-Injektion handelt, um die Dekalzifizierung der 1. stromabwärts gelegenen Einspritzstelle zu ermöglichen.

4. Verfahren nach Anspruch 2 oder 3, **dadurch gekennzeichnet, dass** die 1. Injektion kontinuierlich oder schrittweise mit einer Häufigkeit von vorzugsweise bis zu mehreren Mal pro Stunde, zum Beispiel mindestens 3 Mal/Std., durchgeführt wird.

5. Verfahren nach einem der Ansprüche 2 bis 4, **dadurch gekennzeichnet, dass** die zweite stromaufwärts durchgeführte Injektion schrittweise mit einer Häufigkeit zwischen 1 und 20 Mal pro Tag, jedoch vorzugsweise zwischen 1 und 4 Mal pro Tag, durchgeführt wird.

6. Verfahren nach einem der Ansprüche 2 bis 5, **dadurch gekennzeichnet, dass** es sich bei der Ableitung um eine zweigeteilte Leitung in Form zweier paralleler Leitungen handelt, wodurch eine dieser beiden Leitungen dauerhaft verwendet werden kann, während die zweite Leitung als Reserve verbleibt, um zum Beispiel bei einer Wartung der ersten Leitung genutzt zu werden.

## Claims

1. Process for the treatment of an industrial effluent loaded with calcium for the purpose of removing all or part of the calcium therefrom, comprising the implementation of the following measures:
- the effluent (10) to be treated is led into a zone equipped with a settler (12);
- a part of the effluent is diverted (13) into a diversion line, part withdrawn at the settler outlet, part of between 3% and 25% of the flow exiting from the settler, preferably between 5% and 10% of the flow exiting from the settler, part withdrawn downstream of a high-pressure pump (9), at a pressure of between 2 and 15 bar, preferably between 3 and 10 bar and more preferentially still between 8 and 10 bar;
- at least one injection (15) of gaseous CO₂ into the diverted stream is carried out, thus producing a reduction in the pH of the diverted stream within the range extending from 4 to 6.8, preferably within the range extending from 4.5 to 6;
- the return of the diverted stream thus treated to the initial effluent, before its arrival in the settler, or to the settler proper is arranged.

2. Process according to Claim 1, **characterized in that** a first injection of CO₂ into the diverted stream, and a second injection into the diverted stream, upstream of the first injection, are carried out.

3. Process according to Claim 2, **characterized in that** the second upstream injection is a sequenced or occasional injection of CO₂, in order to make it possible to descale the 1st downstream injection point.

4. Process according to Claim 2 or 3, **characterized in that** the 1st injection is carried out continuously or sequentially, with a frequency preferentially amounting to several times per hour, for example at least 3 times/h.

5. Process according to one of Claims 2 to 4, **characterized in that** the second upstream injection is carried out sequentially, with a frequency located between 1 and 20 times per day but preferably between 1 and 4 times per day.

6. Process according to one of Claims 2 to 5, **characterized in that** the diversion line is a line split in two in the form of two parallel lines, making it possible for one of these two lines to be used permanently, while the second line remains in reserve, for example in order to be used in the case of maintenance of the first line.
